# EUROPEAN PATENT SPECIFICATION

(11) **EP 2 486 320 B1**
(45) Date of publication and mention of the grant of the patent: **31.05.2017**
(21) Application number: 10760398.7
(22) Date of filing: 27.09.2010
(51) Int. Cl.: F16L 37/22

(54) **HOSE CONNECTOR LOCK**
SCHLAUCHANSCHLUSSARRETIERUNG
DISPOSITIF DE BLOCAGE POUR RACCORD DE TUYAU

(30) Priority: 08.10.2009 GB 0917618
(43) Date of publication of application: 15.08.2012
(73) Proprietor: CM Engineering Consultants Limited, Malvern, Worcestershire WR14 2QG (GB)
(72) Inventor: MORRIS, Colin Anthony, Alfrick Worcestershire WR6 5HJ (GB)
(74) Representative: Jackson, Derek Charles
(86) International application number: PCT/GB2010/051609
(87) International publication number: WO 2011/042718

(56) References cited:
- WO-A1-00/40885
- US-A- 2 565 659
- US-A- 3 359 015
- US-A- 5 066 049
- US-A- 5 390 963
- US-A- 5 462 316
- US-A1- 2008 054 637

## Description

The present invention relates to a tractor and a trailer with an air brake hose connection system, the air brake connection system incorporating a lock.

An articulated lorry, comprising a tractor and trailer, has flexible air brake lines or hoses extending between tractor and trailer. These are coils of nylon tubing, known as Susie coils. For uncoupling of the trailer, the hoses are disconnectable from the trailer, but they are not disconnectable from the tractor. Typically there is a primary hose (a red hose) in which an elevated pressure is maintained; and there is a secondary hose (a yellow hose) through which pressure signals are transmitted to cause application of the brakes in the trailer. The hoses are subject to considerable wear and tear, and can occasionally fail. The vehicle cannot be moved until the hose has been repaired; and repair must be carried out by a qualified fitter. The driver of the vehicle is not permitted under safety regulations to make repairs to the hoses.

WO2009/150471 describes an air brake connection system in which a brake hose has fittings at its ends that are uncouplably connectable to both a tractor fitting and to a trailer fitting. In use, should the hose fail, the driver can disconnect it from both tractor and trailer and replace it with a spare hose. This is a few minutes' job, involving no skill on behalf of the driver beyond that required in coupling his tractor to a trailer, when he has to couple the air hoses. The system may include a locking box to ensure that the hoses cannot be removed from the tractor until the box has been unlocked. It is an aim of the present invention to provide an improved locking mechanism to prevent unauthorised disconnection of such a hose fitting.

WO00/40885 describes a quick coupler retention clip for preventing inadvertent disconnection of a quick coupler. The clip device includes a unitary clip having a first and a second end. The first end of the clip is of annular configuration so that the body of the coupler extends through the annular first end for anchoring the first end of the clip relative to the body. The second end of the clip is a C-shaped configuration to removable engage a groove defined between a collar and the body of the coupler. A strap extends between the first and second ends of the clip for securing the first and second ends of the clip together. The disconnection of a female portion of the body from a male portion of the port of the quick coupler by axial movement of the collar along a cylindrical part of the coupler defining the groove is permitted only when the C-shaped second end is removed from engagement with the groove so that inadvertent disconnection of the body from the port is prevented.

US5462316 describes a quick action coupling including male and female coupling parts in which spherical camming members are loosely retained in a multiplicity of circumferentially disposed openings extending radially through a wall portion of the female coupling member. An axially movable collar surrounding the cylindrical wall portion of the female coupling member has an internally disposed camming surface portion which is configured to cam the spherical members radially inwardly upon movement of the collar in the direction of the open end of the coupling member. Locking means block movement to the uncoupled position.

US3359015 describes a quick connect tube coupling with a male member including a circumferential groove immediately adjacent the inner end of a sleeve thereon. The groove is adapted to removably receive a lock ring which precludes inadvertent actuation of the coupling.

US5390963 describes a tube coupler which has a main tubular socket body connected to a first tube, a main tubular plug body connected to a second tube and removably connected to the main tubular socket body, and a locking mechanism for locking together the main tubular socket body and the main tubular plug body in a state in which the main tubular plug body is inserted in the main tubular socket body.

According to the present invention there is provided a tractor and a trailer with an air brake hose connection system, the air brake hose connection system comprising: a female coupling attached to a tractor; a male coupling attached to the tractor; a primary air hose including a male coupling at one end thereof to connect with the female coupling attached to the tractor and with a coupling at a trailer end thereof adapted to disconnectably connect to a trailer; a secondary air hose including a female coupling at a tractor end thereof to connect with the male coupling attached to the tractor and with a coupling at a trailer end thereof adapted to disconnectably connect to the trailer; the trailer end coupling of each hose including a self-sealing valve to ensure that the trailer end of the hose remains sealed when disconnected from the trailer; the female coupling attached to the tractor incorporating a generally cylindrical end body part and a sleeve retractable along the end body part to release the male coupling of the primary air hose from the female coupling; the female coupling of the secondary air hose incorporating a generally cylindrical end body part and a sleeve retractable along the end body part to release the secondary air hose from the male coupling attached to the tractor; a first lock mechanism adapted to prevent unauthorised disconnection of the first air brake hose and located at least partly around the end body part of the female coupling attached to the tractor and preventing the sleeve from being retracted sufficiently to release the male coupling of the primary air hose; and a second lock mechanism adapted to prevent unauthorised disconnection of the secondary air hose and located at least partly around the end body part of the female coupling of the secondary air hose and preventing the sleeve from being retracted sufficiently to release the male coupling attached to the tractor.

Typically, the end body part defines at least one flat surface portion, and the lock mechanism preferably engages with the flat surface portion so as to prevent rotation of the lock mechanism around the end body portion. Indeed, the end body part may define two opposed flat surface portions, and the lock mechanism preferably engages the two opposed flat surface portions.

The secondary air hose may include a washer defining a projecting flange connected to the end body part thereof remote from a free end of the female coupling, to ensure that the lock mechanism cannot be slid off the end body part. Alternatively, the end body part of the secondary air hose may include an integral projecting flange to ensure that the lock mechanism cannot be slid off the end body part. The projecting flange, whether it is integral or not, may be of uniform radius so that it projects a uniform distance around the periphery of the end body part or, alternatively, may be of non uniform radius.

The female coupling of the secondary air hose may include one or more radial projections connected to or integral with the end body part and engageable with the second lock mechanism to prevent the second lock mechanism from sliding off the end body part.

The lock mechanism may comprise two jaws, pivotally connected to each other at one end, and at the other ends provided with a securing mechanism to secure the other ends together, and wherein intermediate parts of the jaws between the pivotal connection and the securing mechanism surround the end body part. An alternative lock mechanism comprises a U-shaped elementthatcan engage with the end body part, and a securing element that can be secured to the ends of the U-shaped element. A further alternative mechanism comprises a generally horseshoe-shaped or U-shaped element that can engage with the end body part, and also at least one gripping element that can be moved into and locked in a position that prevents removal from the end body part.

The invention will now be further and more particularly described, by way of example only, and with reference to the accompanying drawings in which:
Figure 1 shows a side view of two air hoses connected to a tractor unit, forming part of a connector system of the
   invention;
Figure 2 shows a perspective view of two air hoses suitable for use in a system as in figure 1;
Figure 3a shows a perspective view of a lock of the connector system of figure 1, shown in isolation in its closed position; and
Figure 3b shows a perspective view of the lock of figure 3a, shown in isolation in its open position.

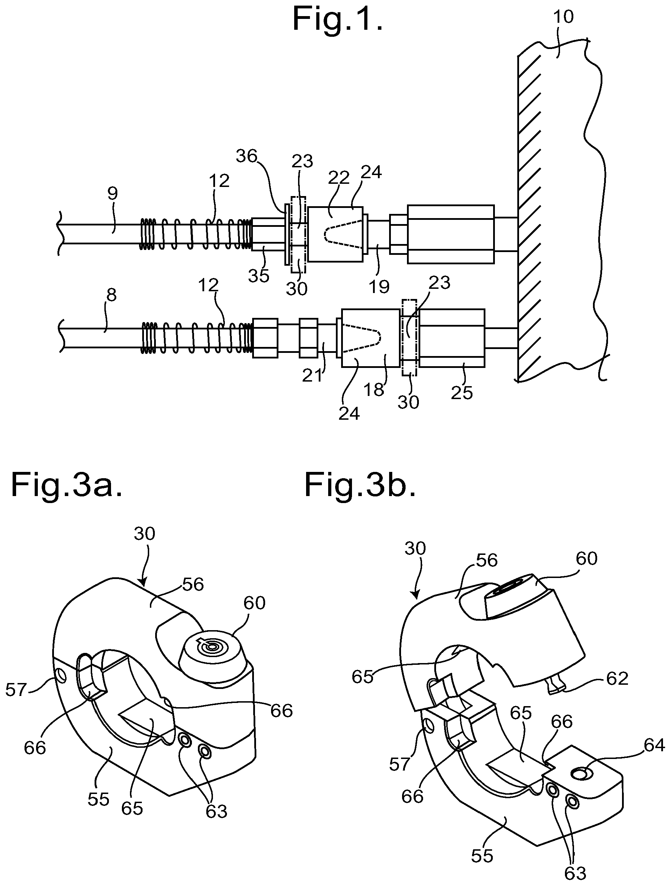

Referring to figure 1, the invention is particularly applicable in the context of air hoses that are disconnectable from a tractor unit 10, as well as being disconnectable from a trailer unit (not shown) as is conventional. The figure shows a tractor unit 10 to which are connected a primary air hose 8 (typically a red hose) and a secondary air hose 9 (which is typically a yellow hose), and which have spiral wire protectors 12 at their ends. At the trailer end (not shown) of the hoses 8 and 9 are conventional couplings: a female primary coupling and a male secondary coupling, which are provided with self-sealing valves to ensure that the hoses 8 and 9 remain sealed when disconnected from the trailer. The hoses 8 and 9 are provided, as shown, with similar couplings at the tractor end: the primary air hose 8 is provided with a male coupling 21 while the secondary hose 9 is provided with a female coupling 22. There are corresponding coupling units fixed at the rear of the tractor unit 10: a female coupling 18 for the primary air hose 8, and a male coupling 19 for the secondary air hose 9. The couplings 18 and 19 are connected to the corresponding air lines within the tractor unit 10.

Each of the female couplings 18 and 22 are of a conventional type, consisting of a generally cylindrical body part 23 respectively, with a sleeve 24. The cylindrical body part 23 has at one end an opening into which the corresponding male coupling 19 or 21 can be inserted. The sleeve 24 is resiliently biased into the engaged position, as shown, and if the coupling is to be disconnected the sleeve 24 must be slid back along the body part 23 away from the opening; this releases the male coupling 19 or 21, so it can be withdrawn. Similarly, if the coupling is to be connected, the sleeve 24 must be slid back along the body part 23 away from the opening; this enables the male coupling 19 or 21 to be inserted, and the sleeve 24 is then released so that the coupling is firmly engaged. The female couplings 18 and 22 may be identical, or alternatively may be of different sizes.

In accordance with the present invention each of the female couplings 18 and 22 is provided with a removable lock 30, shown in chain dotted lines, that fits over the body part 23 at the end remote from the opening, and that prevents the sleeve 24 from being slid back sufficiently to release the corresponding male coupling 19 or 21. In some cases, as with the female coupling 18, the coupling is itself connected at that end to a component 25 that is of greater width than the body part 23, and the component 25 prevents the lock 30 from being slid off the end of the body part 23. In other cases, as with the female coupling 22, where the adjacent component 35 is of less width than the body part 23, a steel washer 36 is connected between the end of the body part 23 and the component 35, and this washer 36 prevents the lock 30 from being slid off the end of the body part 23.

Although the body part 23 is envisaged as being a separate component from the adjacent component 25, it will be appreciated that in a modification these may be integral with each other. Similarly the washer 36 may form an integral part of the body part 23.

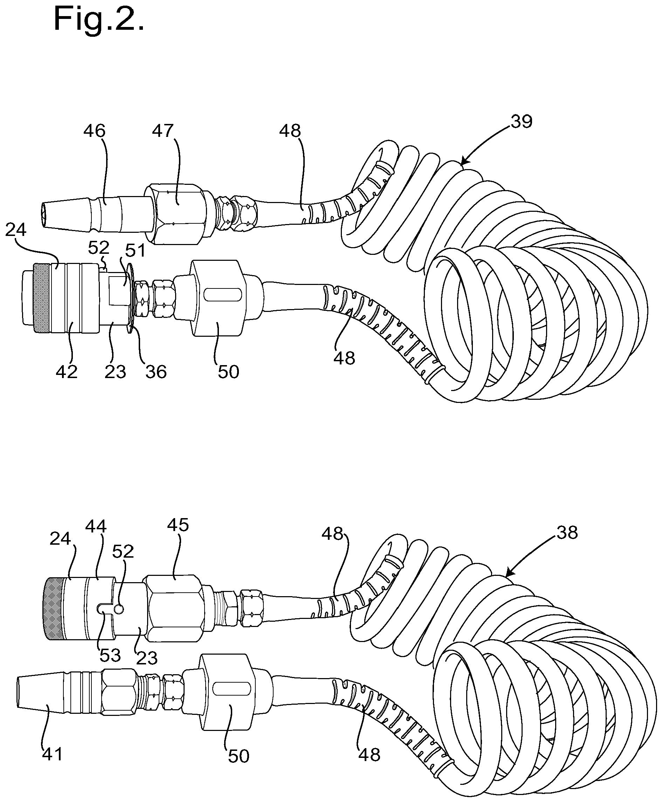

Referring now to figure 2 there are shown a replacement primary (red) hose 38 and a replacement secondary (yellow) hose 39 which may be used in place of the air hoses 8 and 9 described above. Such a pair of hoses 38 and 39 might constitute a repair kit to be carried in the cab of the tractor unit 10. In a similar way to that described above, the red hose 38 is provided with a male coupling 41 at the end for connection to the tractor unit 10, and is provided with a female coupling 44 that incorporates a self-sealing valve 45 at the end for connection to the trailer. The yellow hose 39 is provided with a female coupling 42 at the end for connection to the tractor unit 10, and is provided with a male coupling 46 that incorporates a self-sealing valve 47 at the end for connection to the trailer. The ends for connection to the tractor unit 10 are further distinguished by an oval plastic moulding 50. In addition, a large washer 36 is provided between the end of the female coupling 42 and the adjacent component of the hose 39 (which is of less width). The end portions of the hoses 38 and 39 are provided with plastic reinforcement covers 48.

The female couplings 42 and 44 each consist of a generally cylindrical body portion 23 that has a pair of opposed flats 51 so that it can be gripped by a spanner during assembly. A pin 52 projects from the body portion 23 at a radial position 90° from the flats 51, and the pin 52 can locate in an axial slot 53 in the surrounding sleeve 24. These features are conventional. The operation of the female couplings 42 and 44 is as described above, and it will be appreciated that the sleeve 24 must be turned so that the axial slot 53 is aligned with the position of the projecting pin 52 before the coupling can be freed by sliding back the sleeve 24. The couplings 41 and 42 for connection to the tractor unit 10 may be complementary to the couplings 44 and 46 for connection to the trailer. Alternatively they may be of a different diameter to the couplings 44 and 46 for connection to the trailer; this would ensure that the hoses 38 and 39 cannot be accidentally connected the wrong way round to the wrong airline.

Referring now to figures 3a and 3b, the lock 30 consists of two arcuate jaws: a lower jaw 55 and an upper jaw 56 which are connected to each other by a pivot pin 57 at one end. The opposite ends of the jaws 55 and 56 are secured together (as shown in figure 3a) by a barrel lock 60 mounted in a recess in the upper jaw 56, the barrel lock 60 having a projecting notched shaft 62 which engages with pins 63 on either side of a recess 64 in the lower jaw 55. The barrel lock 60 can be unlocked with a cylindrical key (not shown) which enables the notched shaft 62 to be turned; if turned through 90° from the orientation shown in figure 3b, the end of the notched shaft 62 can fit between the pins 63, and if it is then turned back to the orientation shown in figure 3b the notches on the shaft 62 engage with the pins 63, so the jaws 55 and 56 are secured to each other. The key can only be withdrawn when the barrel lock 60 is in its locked orientation, that is to say with the notched shaft 62 in the orientation shown in figure 3b.

The operation of the lock 30 will be described particularly in the context of attachment to the female coupling 42 on the hose 39 (which corresponds to the female coupling 22 on the hose 9). When the jaws 55 and 56 are closed together they define a generally cylindrical aperture of diameter slightly larger than that of the body part 23; the lower and upper jaws 55 and 56 meet on a plane that corresponds to a diameter of this aperture. Within this aperture the jaws 55 and 56 also define opposed raised flat portions 65, on the far side of the lock 30 as shown, which mate with the flats 51 on the body part 23. The jaws 55 and 56 also define two open-ended recesses 66 into which the pin 52 can locate, on either side of the diametral plane, on the near side as shown. Hence the lock 30 can be opened, and then the jaws 55 and 56 closed over the body part 23 so that the flat portions 65 engage with the flats 51 and prevent the lock 30 from rotating. The projecting pin 52 locates in one or other of the recesses 66. The lock 30 is then secured in this position, as shown in figure 1, preventing the female coupling 42 (or 22) from being released from the adjacent male coupling 19 on the tractor unit 10. The washer 36 prevents the lock 30 from being slid off the end of the female coupling 42.

The lock 30 has been described as being attached to the female coupling 42 on the secondary hose 39, but is equally suitable for use on the female coupling 18 on the tractor unit 10 to which the primary hose 8 (or 38) is connected. Hence the connection system, as shown in figure 1, includes the female and male couplings 18 and 19 fixed onto the tractor unit 10; the disconnectable male and female couplings 21 and 22 (or 41 and 42) at the tractor end of the hoses 8 and 9 (or 38 and 39); and the two locks 30 that are locked onto the two female couplings 18 and 22 (or 42) to prevent unauthorised disconnection.

The lock 30 may be made of any suitable material, desirably one of low density. In particular the jaws 55 and 56 may be made of aluminium, or of a plastic. The pivot pin 57 and the pins 63 may be of a harder material such as steel.

The lock 30 is shown only by way of example, and it will be appreciated that it may be modified in various ways while remaining within the scope of the present invention. For example it may incorporate a different lock from the barrel lock 60, and it may have a different external shape. Instead of the single pivot pin 57 there might instead be a linking element which is itself linked by pivot pins to one end of each of the jaws. As a further alternative the jaws might be connected together by mechanisms like the barrel lock 60 at both ends, rather than being pivotally connected at one end. In another alternative the lock might comprise a rigid U-shaped member adapted to fit over the body part 23, the two ends of the U-shaped member connecting with a straight locking element. Again it is preferable if the U-shaped member or the locking element engages with the flats 51 on the body part 23, to ensure that the lock does not rotate. A further alternative mechanism comprises a generally horseshoe-shaped member that can locate adjacent to the end body part, with at least one gripping element that can be slid or pivoted into, and locked in, a position that prevents removal from the end body part.

In the example shown in figures 1 and 2 there is a washer 36 to prevent the lock 30 from being slid off the end of the body part 23; alternatively or additionally the lock might engage with elements on the body part 23 that prevent it being slid off. For example in a modification to the lock 30 the recesses 66 are present only on the inner, cylindrical face of the lock 30, and are closed at the end face. In that case the modified lock can be closed so that the pin 52 locates in one of the recesses 66, and since the end face of the recess 66 is closed, the modified lock 30 cannot be slid along the body part 23.

It will be also appreciated that locks 30 can also be used at the trailer end of the hoses 38 and 39, to prevent unauthorised disconnection of the hoses from the trailer. If the couplings at the trailer end are of a different size to those at the tractor end, then the locks for use at the trailer end would also be of a different size to those at the tractor end. It should, however, be understood that the locks 30 are primarily intended for use at the tractor end, as regulations require that the hoses cannot be unintentionally disconnected from the tractor end. Indeed the locks 30 might be used in an application where the couplings at the tractor end are male and female couplings as described in relation to figure 1, whereas the couplings at the trailer end are a different type of coupling, such as a gladhand coupling.

## Claims

1. A tractor and a trailer with an air brake hose connection system, the air brake hose connection system comprising:
a female coupling (18) attached to a tractor (10);
a male coupling (19) attached to the tractor (10);
a primary air hose (8, 38) including a male coupling (21, 41) at a tractor end thereof to connect with the female coupling (18) attached to the tractor and with a coupling (44) at a trailer end thereof adapted to disconnectably connect to a trailer;
a secondary air hose (9, 39) including a female coupling (22,42) at a tractor end thereof to connect with the male coupling (19) attached to the tractor and with a coupling (46) at a trailer end thereof adapted to disconnectably connect to the trailer;
the trailer end coupling (46) of each hose (8, 9, 38, 39) including a self-sealing valve (45, 47) to ensure that the trailer end of the hose remains sealed when disconnected from the trailer;
the female coupling (18) attached to the tractor (10) incorporating a generally cylindrical end body part (23) and a sleeve (24) retractable along the end body part (23) to release the male coupling (21, 41) of the primary air hose (8, 38) from the female coupling (18);
the female coupling (22, 42) of the secondary air hose (9, 39) incorporating a generally cylindrical end body part (23) and a sleeve (24) retractable along the end body part (23) to release the secondary air hose (9, 39) from the male coupling (19) attached to the tractor;
a first lock mechanism (30) adapted to prevent unauthorised disconnection of the primary air hose (8, 38) and located at least partly around the end body part (23) of the female coupling (18) attached to the tractor (10) and preventing the sleeve (24) from being retracted sufficiently to release the male coupling (21, 41) of the primary air hose (8, 38); and
a second lock mechanism (30) adapted to prevent unauthorised disconnection of the secondary air hose (9, 39) and located at least partly around the end body part (23) of the female coupling (22, 42) of the secondary air hose (9, 39) and
preventing the sleeve (24) from being retracted sufficiently to release the male coupling (19) attached to the tractor (10).

2. A tractor and a trailer with an air brake hose connection system as claimed in claim 1, wherein the end body part (23) defines at least one flat surface portion (51), and the lock mechanism (30) engages with the flat surface portion (51).

3. A tractor and a trailer with an air brake hose connection system as claimed in claim 2, wherein the end body part (23) defines two opposed flat surface portions (51), and the lock mechanism (30) engages the two opposed flat surface portions (51).

4. A tractor and a trailer with an air brake hose connection system as claimed in any preceding claim, wherein the secondary air hose (9, 39) includes a washer (36) defining a projecting flange connected to the end body part (23) thereof remote from a free end of the female coupling (22, 42), to ensure that the lock mechanism (30) cannot be slid off the end body part (23).

5. A tractor and a trailer with an air brake hose connection system as claimed in any one of claims 1 to 3, wherein the end body part (23) of the secondary air hose (9, 39) includes an integral projecting flange to ensure that the lock mechanism (30) cannot be slid off the end body part (23).

6. A tractor and a trailer with an air brake hose connection system as claimed in claim 4 or 5, wherein the projecting flange (36) is of uniform radius so that it projects a uniform distance around the periphery of the end body part (23).

7. A tractor and a trailer with an air brake hose connection system as claimed in claim 4 or 5, wherein the projecting flange is of non uniform radius.

8. A tractor and a trailer with an air brake hose connection system as claimed in any preceding claim, wherein the female coupling (42) of the secondary air hose (39) includes one or more radial projections (52) connected to or integral with the end body part (23) and engageable with the second lock mechanism (30) to prevent the second lock mechanism (30) from sliding off the end body part (23).

9. A tractor and a trailer with an air brake hose connection system as claimed in any preceding claim, wherein the lock mechanism (30) comprises two jaws (55, 56), pivotally connected to each other (57) at one end, and at the other ends provided with a securing mechanism (60) to secure the other ends together, and wherein intermediate parts of the jaws (55, 56) between the pivotal connection (57) and the securing mechanism (60) surround the end body part (23).

## Patentansprüche

1. Traktor und Anhänger mit einem Luftdruckbremsschlauchverbindungssystem, wobei das Luftdruckbremsschlauchverbindungssystem Folgendes umfasst:
einen an einem Traktor (10) angebrachten Aufnahmekupplungsteil (18);
einen an dem Traktor (10) angebrachten Steckkupplungsteil (19);
einen primären Luftdruckschlauch (8, 38) mit einem Steckkupplungsteil (21, 41) an einem Traktorende davon zum Verbinden mit dem an dem Traktor angebrachten Aufnahmekupplungsteil (18) und mit einer Kupplung (44) an einem Anhängerende davon, zum abtrennbaren Verbinden mit einem Anhänger;
einen sekundären Druckluftschlauch (9, 39) mit einem Aufnahmekupplungsteil (22, 42) an einem Traktorende davon zum Verbinden mit dem an dem Traktor angebrachten Steckkupplungsteil (19) und mit einer Kupplung (46) an einem Anhängerende davon zum abtrennbaren Verbinden mit dem Anhänger;
wobei die Anhängerendekupplung (46) jedes Schlauchs (8, 9, 38, 39) ein Selbstdichtungsventil (45, 47) aufweist, um sicherzustellen, dass das Anhängerende des Schlauchs abgedichtet bleibt, wenn es vom Anhänger abgetrennt wird;
wobei das am Traktor (10) angebrachte Aufnahmekupplungsteil (18) einen allgemein zylindrischen Endkörperteil (23) und eine Hülse (24) beinhaltet, die entlang dem Endkörperteil (23) zurückgezogen werden kann, um den Steckkupplungsteil (21, 41) des primären Druckluftschlauchs (8, 38) vom Aufnahmekupplungsteil (18) zu lösen;
wobei der Aufnahmekupplungsteil (22, 42) des sekundären Druckluftschlauchs (9, 39) einen allgemein zylindrischen Endkörperteil (23) und eine Hülse (24) beinhaltet, die entlang dem Endkörperteil (23) zurückgezogen werden kann, um den sekundären Druckluftschlauch (9, 39) von dem am Traktor angebrachten Steckkupplungsteil (19) zu lösen;
einen ersten Sperrmechanismus (30) zum Verhindern eines unbefugten Abtrennens des primären Druckluftschlauchs (8, 38), wenigstens teilweise um den Endkörperteil (23) des am Traktor (10) angebrachten Aufnahmekupplungsteils (18) herum positioniert, der verhindert, dass die Hülse (24) ausreichend weit zurückgezogen wird, um den Steckkupplungsteil (21, 41) des primären Druckluftschlauchs (8, 38) zu lösen; und
einen zweiten Sperrmechanismus (30), um ein unbefugtes Abtrennen des sekundären Druckluftschlauchs (9, 39) zu verhindern, und wenigstens teilweise um den Endkörperteil (23) des Aufnahmekupplungsteils (22, 42) des sekundären Druckluftschlauchs (9, 39) herum positioniert, der verhindert, dass die Hülse (24) ausreichend weit zurückgezogen wird, um den am Traktor (10) angebrachten Steckkupplungsteil (19) zu lösen.

2. Traktor und Anhänger mit einem Druckluftbremsschlauchverbindungssystem nach Anspruch 1, wobei der Endkörperteil (23) wenigstens einen flachen Oberflächenabschnitt (51) definiert und der Sperrmechanismus (30) mit dem flachen Oberflächenteil (51) in Eingriff kommt.

3. Traktor und Anhänger mit einem Druckluftbremsschlauchverbindungssystem nach Anspruch 2, wobei der Endkörperteil (23) zwei gegenüberliegende flache Oberflächenabschnitte (51) definiert und der Sperrmechanismus (30) in die beiden gegenüberliegenden flachen Oberflächenabschnitte (51) eingreift.

4. Traktor und Anhänger mit einem Druckluftbremsschlauchverbindungssystem nach einem vorherigen Anspruch, wobei der sekundäre Druckluftschlauch (9, 39) eine Zwischenscheibe (36) aufweist, die einen vorstehenden Flansch definiert, der mit dem Endkörperteil (23) davon fern von einem freien Ende des Aufnahmekupplungsteils (22, 42) verbunden ist, um zu gewährleisten, dass der Sperrmechanismus (30) nicht vom Endkörperteil (23) abgleiten kann.

5. Traktor und Anhänger mit einem Druckluftbremsschlauchverbindungssystem nach einem der Ansprüche 1 bis 3, wobei der Endkörperteil (23) des sekundären Druckluftschlauchs (9, 39) einen integralen vorstehenden Flansch aufweist, um zu gewährleisten, dass der Sperrmechanismus (30) nicht vom Endkörperteil (23) abgleiten kann.

6. Traktor und Anhänger mit einem Druckluftbremsschlauchverbindungssystem nach Anspruch 4 oder 5, wobei der vorstehende Flansch (36) einen gleichförmigen Radius hat, so dass er mit einer gleichförmigen Distanz um die Peripherie des Endkörperteils (23) herum vorsteht.

7. Traktor und Anhänger mit einem Druckluftbremsschlauchverbindungssystem nach Anspruch 4 oder 5, wobei der vorstehende Flansch einen ungleichförmigen Radius hat.

8. Traktor und Anhänger mit einem Druckluftbremsschlauchverbindungssystem nach einem vorherigen Anspruch, wobei der Aufnahmekupplungsteil (42) des sekundären Druckluftschlauchs (39) einen oder mehrere radiale Vorsprünge (52) aufweist, die mit dem Endkörperteil (23) verbunden oder einstückig damit sind und mit dem zweiten Sperrmechanismus (30) in Eingriff gebracht werden können, um zu verhindern, dass der zweite Sperrmechanismus (30) vom Endkörperteil (23) abgleitet.

9. Traktor und Anhänger mit einem Druckluftbremsschlauchverbindungssystem nach einem vorherigen Anspruch, wobei der Sperrmechanismus (30) zwei Backen (55, 56) umfasst, die schwenkbar an einem Ende miteinander (57) verbunden sind, und an den anderen Enden mit einem Sicherheitsmechanismus (60) versehen, um die anderen Enden aneinander zu befestigen, und wobei Zwischenteile der Backen (55, 56) zwischen der Schwenkverbindung (57) und dem Befestigungsmechanismus (60) den Endkörperteil (23) umgeben.

## Revendications

1. Tracteur et remorque comportant un système de raccordement de boyaux de freins à air, le système de raccordement de boyaux de freins à air comprenant :
un raccord femelle (18) attaché à un tracteur (10) ;
un raccord mâle (19) attaché au tracteur (10) ;
un boyau d'air principal (8, 38) comportant un raccord mâle (21, 41) à une extrémité tracteur de celui-ci destiné à être raccordé au raccord femelle (18) attaché au tracteur et à un raccord (44) situé à une extrémité remorque de celui-ci adapté pour être raccordé de manière détachable à une remorque ;
un boyau d'air secondaire (9, 39) comportant un raccord femelle (22, 42) à une extrémité tracteur de celui-ci destiné à être raccordé au raccord mâle (19) attaché au tracteur et à un raccord (46) situé à une extrémité remorque de celui-ci adapté pour être raccordé avec faculté de débranchement à la remorque ;
le raccord extrémité remorque (46) de chaque boyau (8, 9, 38, 39) comportant un clapet auto-obturant (45, 47) pour garantir que l'extrémité remorque du boyau reste scellée quand elle est débranchée de la remorque ;
le raccord femelle (18) attachée au tracteur (10) incorporant une pièce corps d'extrémité (23) généralement cylindrique et un manchon (24) rétractable le long de la pièce corps d'extrémité (23) pour libérer le raccord mâle (21, 41) du boyau d'air principal (8, 38) d'avec le raccord femelle (18) ;
le raccord femelle (22, 42) du boyau d'air secondaire (9, 39) incorporant une pièce corps d'extrémité (23) généralement cylindrique et un manchon (24) rétractable le long de la pièce corps d'extrémité (23) pour libérer le boyau d'air secondaire (9, 39) d'avec le raccord mâle (19) attaché au tracteur ;
un premier mécanisme de blocage (30) adapté pour empêcher le débranchement non autorisé du boyau d'air principal (8, 38) et situé au moins partiellement autour de la pièce corps d'extrémité (23) du raccord femelle (18) attaché au tracteur (10) et
empêchant que le manchon (24) se rétracte suffisamment et libère le raccord mâle (21, 41) du boyau d'air principal (8, 38) ; et
un second mécanisme de blocage (30) adapté pour empêcher le débranchement non autorisé du boyau d'air secondaire (9, 39) et situé au moins partiellement autour de la pièce corps d'extrémité (23) du raccord femelle (22, 42) du boyau d'air secondaire (9, 39) et empêchant que le manchon (24) se rétracte suffisamment et libère le raccord mâle (19) attaché au tracteur (10).

2. Tracteur et remorque comportant un système de raccordement de boyaux de freins à air selon la revendication 1, dans lesquels la pièce corps d'extrémité (23) définit au moins une partie de surface plate (51), et le mécanisme de blocage (30) s'enclenche avec la partie de surface plate (51).

3. Tracteur et remorque comportant un système de raccordement de boyaux de freins à air selon la revendication 2, dans lesquels la pièce corps d'extrémité (23) définit deux parties de surface plate opposées (51), et le mécanisme de blocage (30) s'enclenche les deux parties de surface plate opposées (51).

4. Tracteur et remorque comportant un système de raccordement de boyaux de freins à air selon l'une quelconque des revendications précédentes, dans lesquels le boyau d'air secondaire (9, 39) comporte une rondelle (36) définissant une bride saillante raccordée à la pièce corps d'extrémité (23) de celui-ci à distance d'une extrémité libre du raccord femelle (22, 42) pour garantir que le mécanisme de blocage (30) ne puisse pas glisser et se détacher de la pièce corps d'extrémité (23).

5. Tracteur et remorque comportant un système de raccordement de boyaux de freins à air selon l'une quelconque des revendications 1 à 3, dans lesquels la pièce corps d'extrémité (23) du boyau d'air secondaire (9, 39) comporte une bride saillante intégrée pour garantir que le mécanisme de blocage (30) ne puisse pas glisser et se détacher de la pièce corps d'extrémité (23).

6. Tracteur et remorque comportant un système de raccordement de boyaux de freins à air selon la revendication 4 ou 5, dans lesquels la bride saillante (36) a un rayon uniforme si bien qu'elle fait saillie sur une distance uniforme autour de la périphérie de la pièce corps d'extrémité (23).

7. Tracteur et remorque comportant un système de raccordement de boyaux de freins à air selon la revendication 4 ou 5, dans lesquels la bride saillante a un rayon non uniforme.

8. Tracteur et remorque comportant un système de raccordement de boyaux de freins à air selon l'une quelconque des revendications précédentes, dans lequel le raccord femelle (42) du boyau d'air secondaire (39) comporte une ou plusieurs saillies radiales (52) raccordées à la pièce corps d'extrémité (23) ou faisant partie intégrale de celle-ci et pouvant s'enclencher avec le second mécanisme de blocage (30) pour empêcher le second mécanisme de blocage (30) de glisser et de se détacher de la pièce corps d'extrémité (23).

9. Tracteur et remorque comportant un système de raccordement de boyaux de freins à air selon l'une quelconque des revendications précédentes, dans lequel le mécanisme de blocage (30) comprend deux mâchoires (55, 56), raccordées de manière pivotante l'une à l'autre (57) à une extrémité, et aux autres extrémités munies d'un mécanisme de fixation (60) pour fixer les autres extrémités ensemble, et dans lesquels des parties intermédiaires des mâchoires (55, 56) entre le raccord pivotant (57) et le mécanisme de fixation (60) entourent la pièce corps d'extrémité (23).
